# EUROPÄISCHE PATENTSCHRIFT

(11) **EP 0 892 280 B1**
(45) Veröffentlichungstag und Bekanntmachung des Hinweises auf die Patenterteilung: **26.01.2005**
(21) Anmeldenummer: 98110211.4
(22) Anmeldetag: 04.06.1998
(51) Int. Cl.: G01V 8/20

(54) **Verfahren zum Betrieb einer opto-elektronischen Sensoranordnung**
Method for operating an opto-electronic sensor device
Procédé pour faire fonctionner un dispositif capteur opto-électronique

(30) Priorität: 15.07.1997 DE 19730341
(43) Veröffentlichungstag der Anmeldung: 20.01.1999
(73) Patentinhaber: Sick AG, 79183 Waldkirch, Breisgau (DE)
(72) Erfinder: Alt, Gerhard, 79350 Sexau (DE); Bürger, Jürgen, 79331 Nimburg (DE)
(74) Vertreter: Finsterwald, Martin, Dr.

(56) Entgegenhaltungen:
- EP-A- 0 116 284
- EP-A- 0 559 357
- DE-A- 3 413 474
- DE-A- 3 701 340
- DE-A- 19 544 632
- US-A- 5 266 810
- US-A- 5 629 704

## Beschreibung

Die Erfindung betrifft ein Verfahren zum Betrieb einer opto-elektronischen Sensoranordnung mit einer Lichtempfangseinheit zum Empfang von aus einem Überwachungsbereich stammenden Licht und mit einer Steuerund Auswerteeinheit.

Bekannte derartige Verfahren sind oftmals auf eine punktförmige Abtastung des Überwachungsbereichs beschränkt. Um Informationen über verschiedene zu überwachende Bereiche oder über Bewegungen eines Objektes im Überwachungsbereich zu erhalten, sind andere Verfahren bekannt, die eine Anordnung von mehreren, in getrennten Gehäusen untergebrachten Einzelsensoren voraussetzen. Die Signale dieser Einzelsensoren werden separat ausgelesen und in der Steuer- und Auswerteeinheit gemeinsam verarbeitet.

Letztgenannte Verfahren weisen den Nachteil auf, daß sie umständlich aus separaten Einzelsensoren zusammengesetzte Sensoranordnungen erfordern, die in ihrer Gesamtheit aufwendig in Herstellung und Aufbau sind, und die einen hohen Platzbedarf besitzen. Die Durchführung der bekannten Verfahren ist außerdem dadurch erschwert, daß die erforderlichen Einzelsensoren auf aufwendige Weise angesteuert, synchronisiert und relativ zum Überwachungsbereich und untereinander justiert werden müssen.

Die EP-A-0 116 284 beschreibt im Zusammenhang mit dem Erkennen von Flächenmustern von Druckerzeugnissen das zeilenweise erfolgende Integrieren eines so genannten charakteristischen optischen Werts. Dabei kann ein Sensor mit mehreren Sensorzeilen vorgesehen sein, die jeweils einer Empfangszone entsprechen. In diesem Fall wird für jede Zeile ein charakteristischer optischer Wert, nämlich der mittlere Grauwert ermittelt.

Die DE 195 44 632 A betrifft eine opto-elektronische Vorrichtung zur Fadenbruchkontrolle bei Textilmaschinen oder zur Bohrerbruchkontrolle bei Werkzeugmaschinen. Zu diesem Zweck steht ein Empfänger aus einer linearen Anordnung von fotosensitiven Elementen einem oder mehreren Lichtsendern gegenüber. Wenn ein Objekt in dem dazwischen liegenden Überwachungsbereich angeordnet ist, werden die Sendelichtstrahlbündel zumindest teilweise unterbrochen. Um die Größe, Geometrie, Position und Anzahl von Objekten im Überwachungsbereich bestimmen zu können, werden zunächst bei freiem Strahlengang die Signalwerte der fotosensitiven Elemente ermittelt und während einer Abgleichphase als Referenzwerte abgespeichert. In einer darauf folgenden Arbeitsphase wird der Überwachungsbereich dadurch überwacht, dass die Signalwerte der fotosensitiven Elemente fortlaufend eingelesen und mit den Referenzwerten verglichen werden.

Eine Aufgabe der Erfindung ist es, ein Verfahren der eingangs genannten Art zu schaffen, durch das mit wenig Bauteilen sowie auf einfache und anpassungsfähige Weise Informationen über verschiedene zu überwachende Bereiche oder über Bewegungen eines Objektes im Überwachungsbereich gewonnen werden können. Das Verfahren soll es insbesondere ermöglichen, unterschiedliche Objekte, deren Lage, oder Anordnungen von Objekten im Überwachungsbereich zu erkennen.

Erfindungsgemäß wird diese Aufgabe durch ein Verfahren mit den Merkmalen des Anspruchs 1 und durch eine Sensoranordnung mit den Merkmalen des Anspruchs 18 gelöst.

Durch diese Unterteilung der lichtempfindlichen Fläche ist es bei Verwendung einer einzigen Lichtempfangseinheit möglich, Informationen über verschiedene Abschnitte des Überwachungsbereichs zu erhalten: Den unterschiedlichen Ausgangssignalen der Empfangszonen können Kontrastunterschiede des die Lichtempfangseinheit beaufschlagenden Lichts innerhalb der Empfangszonen zugeordnet werden. Hierdurch sind Rückschlüsse möglich auf die Anwesenheit oder die Beschaffenheit von Objekten in den verschiedenen Abschnitten des Überwachungsbereichs. Diese Abschnitte entsprechen als Objektzonen jeweils einer Empfangszone der Lichtempfangseinheit.

Bei äquidistanter Unterteilung des Überwachungsbereichs läßt sich beispielsweise die Ausdehnung oder die Lage eines Objekts im Überwachungsbereich ermitteln, indem geprüft wird, welche der Objektzonen von dem Objekt eingenommen werden. Gleichermaßen können auch unterschiedliche Anordnungen von Objekten als Muster erkannt oder voneinander unterschieden werden. Das erfindungsgemäße Verfahren ermöglicht jedoch auch eine Unterteilung des Überwachungsbereichs in verschieden große, an eine spezielle Anordnung von Objekten adaptierte Objektzonen. Weiterhin können einzelne Objekte, die selbst einen Kontrast aufweisen, erkannt werden.

Das erfindungsgemäße Verfahren ermöglicht es also auf vorteilhafte Weise, eine einzige Sensoranordnung für eine Fülle unterschiedlicher Anwendungen zu verwenden. Dabei ist die Lichtempfangseinheit als einzelnes Bauteil ausgebildet. Dies vermindert den Herstellungsaufwand und den Platzbedarf der Sensoranordnung. Überdies ist die Sensoranordnung genauso einfach zu justieren wie ein einziger Einzelsensor.

In einer bevorzugten Ausführungsform des erfindungsgemäßen Verfahrens lassen sich die Empfangszonen der Lichtempfangseinheit unabhängig voneinander auslesen. Dadurch läßt sich die Sensoranordnung wie mehrere unabhängige, benachbart angeordnete Einzelsensoren betreiben, die verschiedene Objektzonen überwachen. Die Empfangszonen können einzeln unabhängig voneinander oder gleichzeitig gemeinsam ausgelesen werden. Wenn jeder Empfangszone ein eigener Schaltausgang zugewiesen wird, können für verschiedene Objektzonen des Überwachungsbereichs individuelle Gegenstands-Feststellungssignale erzeugt werden.

Es ist außerdem bevorzugt, wenn die Lichtempfangseinheit aus mehreren, insbesondere einer Vielzahl von einzelnen Empfangselementen aufgebaut ist. Diese Empfangselemente sind vorzugsweise benachbart angeordnet. Falls sie individuell ausgelesen werden können, lassen sich beim erfindungsgemäßen Verfahren Kontraste an oder zwischen Objekten im Überwachungsbereich mit hoher Genauigkeit und Auflösung erkennen. Es ist besonders vorteilhaft, wenn bei der Unterteilung der Lichtempfangseinheit in mehrere Empfangszonen jeweils mehrere Empfangselemente zu einer Empfangszone zusammengefaßt werden.

Die Lichtempfangseinheit ist bevorzugt als Opto-ASIC, Photodiode, Photo-Array oder Ladungsspeicher-Bildeinheit (CCD) ausgebildet. Die Empfangselemente können dabei insbesondere in Zeilen oder als Matrix angeordnet sein. Jedoch sind auch weitere, komplexere Anordnungen der Empfangselemente, beispielsweise eine rotationssymmetrische Anordnung, möglich.

Jede Empfangszone der Lichtempfangseinheit kann mehrere Ausgangssignale liefern, die jeweils der Detektion von Licht in einem bestimmten örtlichen Bereich der Empfangszone entsprechen und die zu einem Schaltsignal zusammengefaßt werden können. Falls jeder Empfangszone jeweils mehrere Empfangselemente zugewiesen werden, können die Ausgangssignale aller Empfangselemente einer Empfangszone eine Aussage über die Intensitätsverteilung des die Empfangszone beaufschlagenden Lichts ermöglichen. Dadurch lassen sich beispielsweise innerhalb einer Empfangszone Lichtkontraste erkennen, die Rückschlüsse auf die Beschaffenheit eines Objekts innerhalb der entsprechenden Objektzone des Überwachungsbereichs zulassen.

Indem durch das erfindungsgemäße Verfahren Licht-Kontrastunterschiede zwischen den Empfangszonen oder innerhalb der Empfangszonen erkannt werden, können diese Kontrastunterschiede den Konturen, der Oberflächenbeschaffenheit oder der Transparenz von Objekten, die sich in unterscheidbaren Abschnitten des Überwachunsbereichs befinden, zugeordnet werden.

Es ist besonders vorteilhaft, wenn ein bestimmter Kontrastunterschied des Lichts, das eine Empfangszone beaufschlagt, unabhängig von seinem örtlichen Auftreten innerhalb der Empfangszone erkannt wird und in ein Schaltsignal transformiert wird. Dadurch kann das Objekt, aufgrund dessen der Kontrastunterschied in der Empfangszone erzeugt wird, an verschiedenen Positionen innerhalb der der Empfangszone entsprechenden Objektzone erkannt werden. Somit muß das Objekt nicht unbedingt exakt durch den Überwachungsbereich geführt werden, um von der Sensoranordnung identifiziert werden zu können.

Die Objektzonen des Überwachungsbereichs können in einer Ebene liegen, die im wesentlichen parallel ist zur lichtempfindlichen Fläche der Lichtempfangseinheit, also zur Anordnung der Empfangszonen. Dadurch ist eine besonders einfache Zuordnung zwischen Objektzonen des Überwachungsbereichs und Empfangszonen der Lichtempfangseinheit möglich. Die Objektzonen können jedoch auch in einer Ebene liegen, die in einem bestimmten Winkel zur lichtempfindlichen Fläche der Lichtempfangseinheit steht.

Vorteilhafterweise kann die Unterteilung der Lichtempfangseinheit in Empfangszonen veränderlich erfolgen und dem jeweiligen Anwendungsfall der Sensoranordnung angepaßt werden. Falls die Lichtempfangseinheit aus mehreren Empfangselementen zusammengesetzt ist, entspricht die Veränderung der Unterteilung einer geänderten Zuordnung der Empfangselemente zu den verschiedenen Empfangszonen.

Die Unterteilung der Lichtempfangseinheit in Empfangszonen kann durch Betätigung von Auswahlmitteln vorgenommen werden; beispielsweise können entsprechende Wahlschalter gesetzt werden, oder die Sensoranordnung kann entsprechend programmiert werden. Die Unterteilung kann jedoch auch aufgrund von Einlern-Vorgängen, sogenannten Teach-Vorgängen, vorgenommen werden.

Für einen Teach-Vorgang kann ein Referenzobjekt in den Überwachungsbereich eingebracht werden, das bezüglich seiner Beschaffenheit oder Form charakteristisch ist für die im Betrieb der Sensoranordnung zu erkennenden Objekte. Der Steuer- und Auswerteeinheit der Sensoranordnung kann während des Teach-Vorgangs beispielsweise der Kontrast des Lichts eingelernt werden, das von der Oberfläche des Referenzobjektes reflektiert oder emittiert wird und die Lichtempfangseinheit beaufschlagt. Gleichermaßen kann der Kontrast zwischen dem vom Referenzobjekt stammenden Licht und dem Hintergrundlicht eingelernt werden.

Es ist weiterhin möglich, eine bestimmte Lichtintensität als Grauwert oder einen bestimmten Intensitätsbereich des vom Referenzobjekt stammenden Lichts unabhängig vom Hintergrund-Lichtsignal als Grauwertbereich der Steuer- und Auswerteeinheit einzulernen. Dimensionen oder Formen von Referenzobjekten können als Lichtkontraste oder Lichtgrauwerte, die sich über einen bestimmten Bereich einer Empfangszone oder über bestimmte Empfangszonen ausdehnen, zum Zwecke des späteren Wiedererkennens in der Steuer- und Auswerteeinheit verarbeitet und abgelegt werden.

Die Kontrastunterschiede und Grauwerte, die der Steuer- und Auswerteeinheit während eines Teach-Vorgangs eingelernt werden, können jeweils innerhalb lediglich einer Empfangszone berücksichtigt werden. Diese Vorgehensweise ist besonders vorteilhaft, wenn die Sensoranordnung zur jeweils unabhängigen Überwachung verschiedener Objektzonen verwendet werden soll. Ob die während eines Teach-Vorgangs für eine Empfangszone ermittelten im nachfolgenden Betrieb der Sensoranordnung nur dieser einen Empfangszone oder allen Empfangszonen gemeinsam zugrunde gelegt werden, kann durch einen Wahlschalter oder andere Auswahlmittel, wie beispielsweise einer entsprechenden Programmierung der Sensoranordnung, festgelegt werden.

Es ist allerdings auch möglich, der Steuer- und Auswerteeinheit Kontrastunterschiede zwischen verschiedenen Empfangszonen einzulernen, beispielsweise um im nachfolgenden Betrieb der Sensoranordnung die Form oder die Lage eines einzigen Objekts im Überwachungsbereich festzustellen.

Das erfindungsgemäße Verfahren ermöglicht es außerdem, der Steuerund Auswerteeinheit Objektsequenzen einzulernen, damit die Sensoranordnung im nachfolgenden Betrieb sich bewegende Objekte, die Geschwindigkeit oder die Bewegungsrichtung von Objekten erkennen kann.

Als Ergebnis eines Teach-Vorgangs können in der Steuer- und Auswerteeinheit Bezugswerte abgelegt werden, die jeweils einer Empfangszone zugeordnet sind. Im Betrieb der Sensoranordnung können die Ausgangssignale der Empfangselemente oder der Empfangszonen der Lichtempfangseinheit in der Steuer- und Auswerteeinheit gegenseitig verrechnet werden oder miteinander oder mit abgelegten Bezugswerten verglichen werden. Die Steuer- und Auswerteeinheit kann Komparatoren aufweisen, in denen abgelegte Bezugswerte als Schwellwerte zum Vergleich dienen. In einer weiteren Ausführungsform kann sie über einen Analog/Digital-Wandler verfügen, in dem die Ausgangssignale der Lichtempfangseinheit digitalisiert werden.

Die Sensoranordnung kann als Lichttaster, Lumineszenstaster, Lichtschranke oder Reflexionslichtschranke aufgebaut sein. Die Objekte im Überwachungsbereich können durch Umgebungslicht passiv beleuchtet sein oder aktiv, beispielsweise flächenhaft oder linienförmig, beleuchtet werden. Die aktive Beleuchtung kann durch eine LED, eine Laserdiode oder eine Anordnung von mehreren dieser Komponenten erfolgen, und sie kann kontinuierlich oder gepulst durchgeführt werden. Ferner kann eine definierte Lichtstärke oder Licht eines bestimmten Wellenlängenbereichs, insbesondere des Ultraviolett-, sichtbaren oder Infrarot-Bereichs, gewählt werden. Bei aktiver Beleuchtung ist eine Autokollimationsanordnung des Sensors besonders vorteilhaft, da eine näherungsweise homogene Beleuchtung des Überwachungsbereichs erzielt wird.

Weiterhin ist es möglich, Objekte im Überwachungsbereich mittels mehrerer Lichtquellen zu beleuchten die insbesondere Licht unterschiedlicher Wellenlängen (z.B. Rot, Grün, Blau) aussenden und bevorzugt sequentiell in Art eines Farbsensors betrieben werden.

Weitere bevorzugte Ausführungsformen der Erfindung sind in den Unteransprüchen angegeben. Die Erfindung wird nachfolgend anhand von Ausführungsbeispielen unter Bezugnahme auf die Figuren beschrieben; in diesen zeigen:
- Figur 1a: eine erfindungsgemäße Unterteilung einer Lichtempfangseinheit mit sechzehn zeilenförmig angeordneten Empfangselementen,
- Figuren 1b und 1c: eine schematische Draufsicht bzw. Seitenansicht einer erfindungsgemäßen Sensoranordnung, welche die Lichtempfangseinheit gemäß Figur 1a enthält,
- Figur 1d: eine innerhalb des Überwachungsbereichs befindliche, mit zu detektierenden Objekten versehene Trägerbahn,
- Figur 2a: eine erfindungsgemäße Unterteilung einer Lichtempfangseinheit, die aus einer Matrix von 64 Empfangselementen besteht,
- Figur 2b: zwei zu erkennende Objekte,
- Figur 2c: eine schematische Draufsicht einer erfindungsgemäßen Sensoranordnung, welche die Lichtempfangseinheit gemäß Figur 2a enthält, und
- Figur 2d: eine innerhalb des Überwachungsraums befindliche Objektszene von vier verschiedenen Objekten.

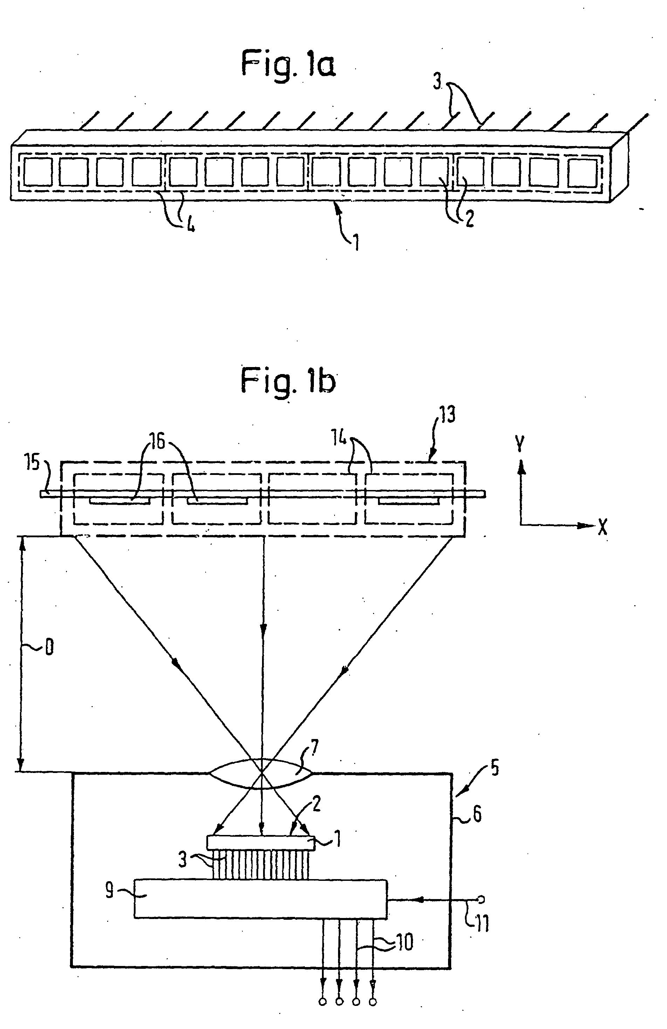

Figur 1a zeigt in perspektivischer Ansicht eine Lichtempfangseinheit 1, die sechzehn im wesentlichen quadratische Empfangselemente 2 aufweist.

Die Empfangselemente 2 sind als Photozeile geradlinig nebeneinander angeordnet. Jedes Empfangselement 2 besitzt an der Rückseite der Lichtempfangseinheit 1 einen eigenen Signalausgang 3. Jeweils vier benachbarte Empfangselemente 2 sind dem erfindungsgemäßen Verfahren entsprechend einer Empfangszone 4 zugeordnet.

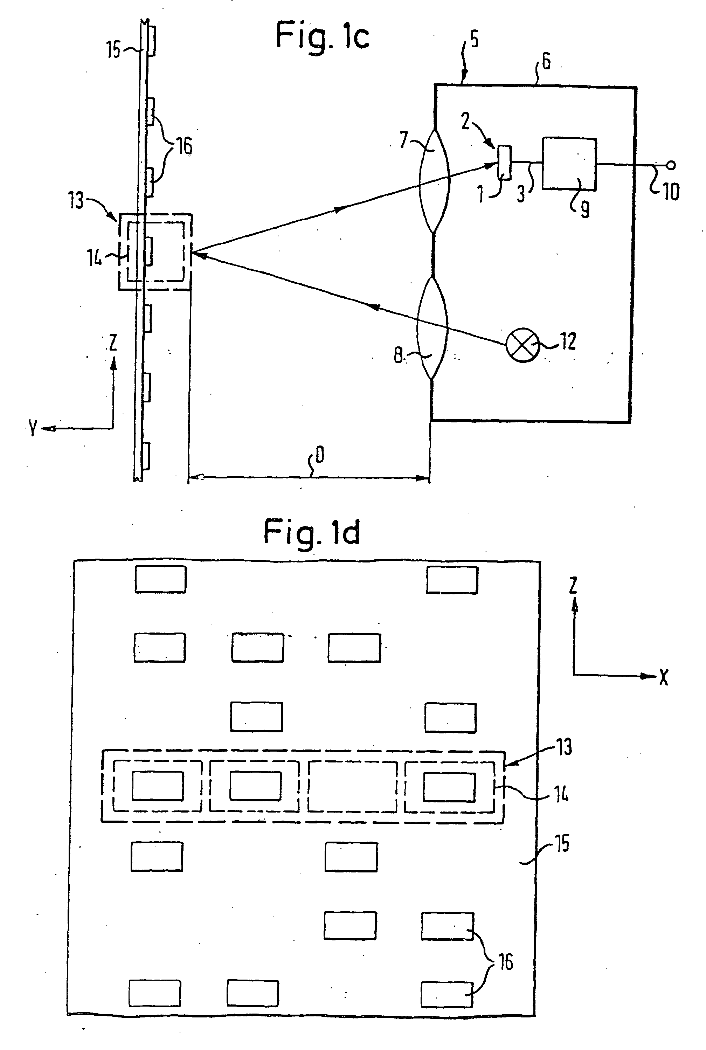

Figuren 1b und 1c zeigen in schematischer, aufgebrochener Draufsicht bzw. Seitenansicht eine Sensoranordnung 5, welche die in Figur 1a dargestellte Lichtempfangseinheit 1 enthält. Die Sensoranordnung 5 besitzt ein rechteckiges Gehäuse 6, an dessen einer Längsseite eine Empfangsoptik 7 und eine darunterliegende Sendeoptik 8 angebracht sind.

Die Lichtempfangseinheit 1 ist dergestalt innerhalb des Gehäuses 6 angeordnet, daß die zeilenförmige Anordnung ihrer Empfangselemente 2 sich in einer Richtung X innerhalb der Papierebene erstreckt und die Empfangselemente 2 im wesentlichen in eine zur X-Achse senkrecht stehende Richtung Y auf die Empfangsoptik 7 weisen. Die Richtung Z, entlang derer die Empfangsoptik 7 und die Sendeoptik 8 angeordnet sind, weist in Fig. 1b aus der Papierebene heraus und bildet mit den Richtungen X, Y ein Orthogonalsystem.

Die sechzehn Signalausgänge 3 der Lichtempfangseinheit 1 führen zu einer ebenfalls im Gehäuse 6 angeordneten Steuer- und Auswerteeinheit 9. Von dieser führen vier analoge oder digitale Schaltausgänge 10 aus dem Gehäuse 6. Weiterhin besitzt die Steuer- und Auswerteeinheit 9 einen von außen zugänglichen Wahlschalter 11 zur Auswahl zwischen verschiedenen Auswertungs-Programmen bzw. zur Auswahl der Unterteilung der Lichtempfangseinheit 1 in Empfangszonen 4.

Ferner befindet sich innerhalb des Gehäuses 6 eine der Sendeoptik 8 im wesentlichen gegenüberstehende Lichtquelle 12 zur Abgabe von Sendelicht, wie beispielsweise eine Halbleiter-Leuchtdiode, eine Laserdiode oder eine Anordnung hiervon.

Der Sensoranordnung 5 steht an der Seite der Empfangsoptik 7 in einem in den Figuren 1b und 1c nicht maßstäblich eingezeichneten Abstand D ein quaderförmiger Überwachungsbereich 13 gegenüber. Der Überwachungsbereich 13 besteht aus vier Objektzonen 14, die benachbart nebeneinander in Richtung X angeordnet sind. Jede Objektzone 14 besitzt eine Ausdehnung jeweils in den Richtungen X und Z (Überwachungsfläche) sowie Y (Tiefenschärfe).

Eine flächige Trägerbahn 15 durchdringt den Überwachungsbereich 13 entlang der Z-Richtung und ragt in sowie entgegen der X-Richtung ein kurzes Stück über den Überwachungsbereich 13 hinaus. Die Trägerbahn 15 ist in Figur 1d in Vorderansicht, also aus der Sicht der Empfangsoptik 7 in Richtung Y, dargestellt.

Auf der der Sensoranordnung 5 zugewandten Seite der Trägerbahn 15 sind als Kontrastmarken Objekte 16 angeordnet. Die möglichen Positionen von Objekten 16 auf der Trägerbahn 15 entsprechen einer Matrix, die aus vier sich jeweils in Z-Richtung erstreckenden Spalten und einer Vielzahl von sich jeweils in X-Richtung erstreckenden Zeilen besteht. Dabei liegt immer genau eine Zeile von vier möglichen Positionen innerhalb des Überwachungsbereichs 13, so daß jede Objektzone 14 einer möglichen Position eines Objekts 16 entspricht. Nicht alle möglichen Positionen auf der Trägerbahn 15 enthalten tatsächlich ein Objekt 16. Jedoch ist jedes an einer möglichen Position vorhandene Objekt 16 so groß, daß seine Abbildung durch die Empfangsoptik 7 auf die Lichtempfangseinheit 1 sich über mindestens ein Empfangselement 2 und höchstens über drei Empfangselemente 2 erstreckt.

Die in den Figuren 1b und 1c dargestellte Sensoranordnung 5 dient als Lichttaster bzw. Kontrasttaster in Pupillenteilung zur Erkennung von Objekten 16 in den vier unabhängigen Objektzonen 14, entsprechend der Arbeitsweise von vier benachbart angeordneten Einzelsensoren. Der Überwachungsbereich 13 wird von der Lichtquelle 12 durch die Sendeoptik 8 aktiv beleuchtet. Die Lichtquelle 12 kann dabei kontinuierlich, moduliert und bevorzugt gepulst betrieben werden. Durch die Sendeoptik 8 wird der Überwachungsbereich 13 entlang der Richtung X zeilenförmig beleuchtet. Durch das dargestellte spezielle Design der Sendeoptik 8 und die Anordnung der Sende- und Empfangsoptik untereinander auf der Z-Achse ergibt sich in X-Richtung ein symmetrischer und annähernd homogener Überwachungsbereich 13.

Ein Teil des von der Lichtquelle 12 abgegebenen Lichts wird von der Trägerbahn 15 und den Objekten 16 reflektiert und durch die Empfangsoptik 7 von den Empfangselementen 2 der Lichtempfangseinheit 1 empfangen. Die Trägerbahn 15 und die als Kontrastmarken fungierenden Objekte 16 sind so beschaffen, daß sich das von ihnen jeweils reflektierte Licht in Intensität und/oder Wellenlänge erkennbar unterscheidet.

Da jedes Empfangselement 2 ein Empfangssignal an die Steuer- und Auswerteeinheit 9 weitergibt, erfolgt die Unterteilung der Lichtempfangseinheit 1 in die vier Empfangszonen 4 in der Steuer- und Auswerteeinheit 9, indem diese die Ausgangssignale von vier benachbarten Empfangselementen 2 jeweils einer Empfangszone 4 zuordnet.

Somit erhält die Steuer- und Auswerteeinheit 9 über die Signalausgänge 3 für jede Objektzone 14 jeweils vier Signale, die verschiedenen räumlichen, in der Richtung X benachbart angeordneten Bereichen dieser Objektzone 14 entsprechen. Ein Objekt 16 innerhalb einer Objektzone 14 bewirkt dabei ein vom Signal an der Trägerbahn 15 reflektierten Lichts oder vom Signal des Hintergrundlichts verschiedenes Signal in zumindest einer, nicht jedoch in allen Empfangselementen 2 einer Empfangszone 4. Dieses Objekt 16 verursacht somit einen Kontrast des die Empfangszone 4 beaufschlagenden Lichts, der unabhängig von der genauen räumlichen Lage des Objektes 16 innerhalb der Objektzone 14 detektiert werden kann.

Falls innerhalb einer Empfangszone 4 ein derartiger Kontrast von der Steuer- und Auswerteeinheit 9 wahrgenommen wird, erzeugt sie an dem der Empfangszone 4 entsprechenden Schaltausgang 10 ein Gegenstands-Feststellungssignal. Somit kann die Anwesenheit eines Objekts 16 bzw. einer Kontrastmarke an einer der vier möglichen Positionen innerhalb der im Überwachungsbereich 13 befindlichen Zeile an dem jeweils entsprechenden Schaltausgang 10 abgelesen werden. Dadurch kann die Anordnung von Objekten 16 innerhalb einer Zeile als Code verwendet werden, der an den Schaltausgängen 10 abgelesen werden kann.

Bei entsprechend hoher Auflösung innerhalb einer Empfangszone 4 ist es auch möglich, Kontraste innerhalb eines Objekts 16 zu detektieren. Dadurch kann ein durch ein bestimmtes Kontrastmuster an einem Objekt 16 verschlüsselter Code in jeder der vier Objektzonen 14 individuell erfaßt, identifiziert und über den entsprechenden Schaltausgang 10 weitergegeben werden.

Bei Bewegung der Trägerbahn 15 in Z-Richtung ist es möglich, die Zeilen von möglichen Positionen von Objekten 16 nacheinander abzutasten, wobei die Objekte 16 einer Zeile jeweils gleichzeitig erfaßt werden. Hierbei ist es sinnvoll, das Auslesen der Empfangselemente 2 durch die Steuer- und Auswerteeinheit 9 mit der Bewegungsgeschwindigkeit der Trägerbahn 15 zu synchronisieren.

Zur sicheren Erkennung der von Objekten 16 an der Lichtempfangseinheit 1 erzeugten Lichtkontraste können diese Kontraste oder Grauwerte des die Lichtempfangseinheit 1 beaufschlagenden Lichts der Steuer- und Auswerteeinheit 9 in einem Teach-Vorgang eingelernt werden. Hierfür wird vor dem eigentlichen Betrieb der Sensoranordnung 5 ein Referenzobjekt in eine Objektzone 14 gebracht. Der dabei in der entsprechenden Empfangszone 4 detektierte Lichtkontrast wird in der Steuer- und Auswerteeinheit 9 als Bezugswert abgelegt. Bei nachfolgendem Betrieb der Sensoranordnung 5 können von den Empfangselementen 2 registrierte Signalwerte mit diesen Bezugswerten verglichen werden. Falls dieser Vergleich eine Übereinstimmung mit den für das Referenzobjekt charakteristischen Merkmalen ergibt, wird an dem der jeweiligen Empfangszone 4 bzw. Objektzone 14 zugeordneten Schaltausgang 10 ein Gegenstands-Feststellungssignal erzeugt.

In ähnlicher Weise können der Steuer- und Auswerteeinheit auch Ausdehnungen von Objekten 16 in X-Richtung bzw. ihre Abstände eingelernt werden. In diesem Fall ist es beispielsweise möglich, daß die Steuer- und Auswerteeinheit 9 nur dann ein Gegenstands-Feststellungssignal an einem jeweiligen Schaltausgang 10 erzeugt, wenn das detektierte Objekt 16 eine Mindestgröße in X-Richtung aufweist. Die Ortsauflösung der Sensoranordnung 5 läßt sich dabei noch weiter erhöhen, indem die Lichtempfangseinheit 1 eine höhere Anzahl von Empfangselementen 2 aufweist.

Die in den Figuren 1a bis 1d dargestellte Unterteilung in vier Empfangszonen 4 bzw. Objektzonen 14 ist eine vorteilhafte Unterteilungsmöglichkeit, jedoch nicht die einzige: Über den Wahlschalter 11 lassen sich unterschiedliche innerhalb der Steuer- und Auswerteeinheit 9 ablaufende Auswertungs-Programme anwählen. Dadurch lassen sich Unterteilungen in eine einzige bis sechzehn Empfangszonen 4 bzw. Objektzonen 14, beispielsweise auch in zwei oder drei, herbeiführen. Die Empfangszonen 4 müssen dabei nicht jeweils gleich groß sein. Bei der Einstellung einer einzigen Empfangszone 4 arbeitet die Sensoranordnung 5 als ortsauflösender Einzelsensor.

Bei der Einstellung von sechzehn Empfangszonen 4 entspricht jedes Empfangselement 2 einer Empfangszone 4. Es ist somit nicht mehr möglich, Objekte ortsunabhängig oder Kontraste an Objekten innerhalb einer einzelnen Objektzone 12 zu detektieren. Jedoch entspricht die Arbeitsweise der Sensoranordnung 5 in diesem Fall trotz der Verwendung einer einzigen Lichtempfangseinheit 1 jener von sechzehn unabhängigen Einzelsensoren. Die Sensoranordnung 5 besitzt bei dieser Betriebsweise den Vorteil, daß sie für die gleichzeitige Abtastung eines in der Richtung X linienförmigen Überwachungsbereichs 13 lediglich eine einzige Lichtempfangseinheit 1 benötigt. Diese Betriebsweise erfordert bei paralleler Signalausgabe sechzehn Schaltausgänge 10, die in Figur 1b nicht dargestellt sind.

Falls bei den vorgenannten Ausführungsformen die Auswertung der an den Empfangselementen 2 detektierten Lichtsignale innerhalb der Sensoranordnung 6 erfolgt, kann an einem Schaltausgang 10, wie beschrieben, ein Gegenstands-Feststellungssignal oder ein analoges Informationssignal erzeugt werden. Falls innerhalb der Sensoranordnung 6 keine Auswertung erfolgt, ist es sinnvoll, die Schaltausgänge 10 als digitale Schnittstelle auszubilden, über welche die Signalinformation weitergeleitet wird.

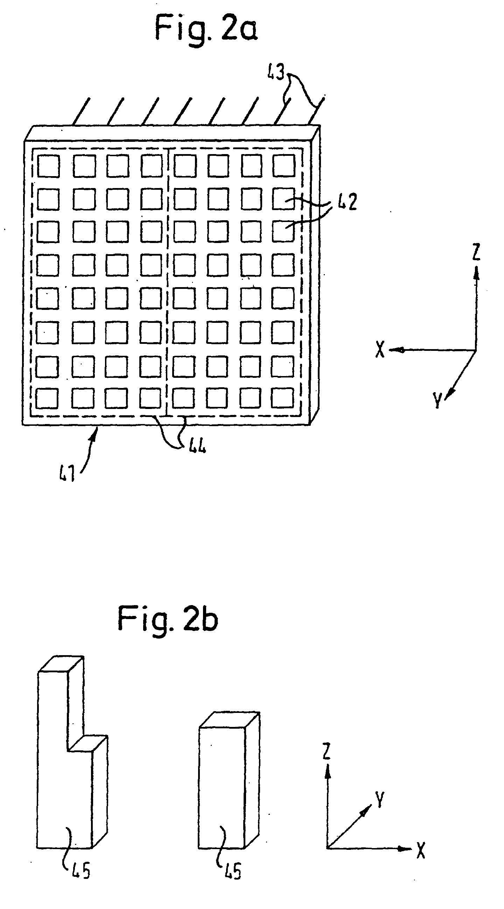

Figur 2a zeigt in perspektivischer Ansicht eine Lichtempfangseinheit 41, die eine quadratische Matrix von vierundsechzig Empfangselementen 42 aufweist. Diese Matrix besteht in einer Richtung Z aus acht Zeilen, in denen jeweils in einer Richtung X acht Empfangselemente 42 als Spalten angeordnet sind. An ihrer Rückseite weist die Lichtempfangseinheit 41 acht Signalausgänge 43 zur sequentiellen Auslese je einer Spalte von Empfangselementen 42 auf. Die Lichtempfangseinheit 41 ist dem erfindungsgemäßen Verfahren entsprechend in zwei Empfangszonen 44 unterteilt, die jeweils vier benachbarte Spalten von Empfangselementen 42 umfassen.

In Figur 2b sind perspektivisch zwei zu detektierende Objekte 45 dargestellt, von den das eine L-förmig und das andere quaderförmig ist. Die beiden Objekte 45 besitzen entlang einer Richtung X im wesentlichen die gleiche Breite und entlang einer Richtung Y einander ähnliche Tiefe. Entlang ihrer Längsrichtung Z weisen sie jedoch eine jeweils unterschiedliche Ausdehnung auf.

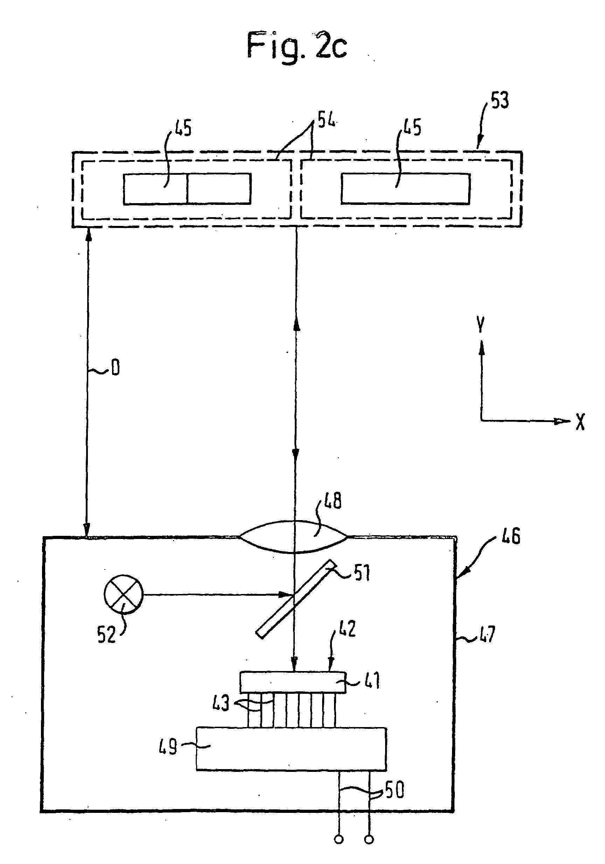

Figur 2c zeigt schematisch eine aufgebrochene Draufsicht auf eine erfindungsgemäße Sensoranordnung 46, welche die in Figur 2a dargestellte Lichtempfangseinheit 41 enthält und die in Figur 2b dargestellten Objekte 45 detektieren soll. Die Z-Achse weist in Figur 2c aus der Papierebene heraus.

Die Sensoranordnung 46 besitzt ein rechteckiges Gehäuse 47 mit einer Längswand, in der eine Sende- und Empfangsoptik 48 untergebracht ist. Innerhalb des Gehäuses 47 steht die Lichtempfangseinheit 41 der Sende- und Empfangsoptik 48 dergestalt gegenüber, daß die Empfangselemente 42 in Richtung der Sende- und Empfangsoptik 48 weisen. Die in der Papierebene verlaufende Zeilenrichtung X sowie die senkrecht zur Papierebene verlaufende Spaltenrichtung Z stehen dabei senkrecht zu der in Richtung Y weisenden optischen Achse der Sende- und Empfangsoptik 48.

Die Signalausgänge 43 der Lichtempfangseinheit 41 führen zu einer ebenfalls innerhalb des Gehäuses 47 angeordneten Steuer- und Auswerteeinheit 49. Diese besitzt zwei jeweils einer Empfangszone 44 zugeordnete Schaltausgänge 50, die aus dem Gehäuse 47 herausgeführt sind.

Weiterhin ist innerhalb des Gehäuses 47 zwischen der Sende- und Empfangsoptik 48 und der Lichtempfangseinheit 41 ein Strahlteiler-Spiegel 51 angeordnet, dessen reflektierende Fläche in einem Winkel von 45° zur optischen Achse der Sende- und Empfangsoptik 48 steht. Senkrecht zu dieser optischen Achse, in der Höhe des Spiegels 51, befindet sich eine Lichtquelle 52.

Der die Sende- und Empfangsoptik 48 aufweisenden Seite der Sensoranordnung 46 steht in einem in Figur 2c nicht maßstäblich eingezeichneten Abstand D ein im wesentlichen quaderförmiger Überwachungsbereich 53 gegenüber. Der Überwachungsbereich 53 ist als Überwachungsfläche mit gleichen Ausdehnungen in den Richtungen X und Z aufgebaut, so daß diese Überwachungsfläche im wesentlichen parallel zur Ebene der Matrixanordnung der Empfangselemente 42 der Lichtempfangseinheit 41 steht. Die Tiefen-Ausdehnung des Überwachungsbereichs erstreckt sich somit in der Richtung Y.

Der Überwachungsbereich 53 ist erfindungsgemäß in der Richtung X in zwei gleich große Objektzonen 54 unterteilt, in denen sich jeweils eines der in Figur 2b dargestellten Objekte 45 befindet. Die Längs-Ausdehnung der Objekte 45 in Z-Richtung erstreckt sich in Figur 2c senkrecht zur Papierebene.

Bei der Sensoranordnung 46 handelt es sich um einen aktiven Lichttaster bzw. Kontrasttaster in Autokollimationsanordnung. Der überwachungsbereich 53 wird von der Lichtquelle 52 über den halbdurchlässigen Strahlteiler-Spiegel 51 und durch die Sende- und Empfangsoptik 48 aktiv beleuchtet. Das von den Objekten 45 reflektierte Licht sowie Hintergrundlicht wird durch die Sende- und Empfangsoptik 48 und über den Spiegel 51 abgebildet, so daß ein Teil dieses Empfangslichts auf die Empfangselemente 42 der Lichtempfangseinheit 41 gelangt. Durch die Autokollimationsstellung wird eine symmetrische und näherungsweise homogene Ausleuchtung des Überwachungsbereichs 53 erzielt.

Die Lichtsignale, die von den Empfangselementen 42 einer Zeile der Matrixanordnung der Lichtempfangseinheit 41 detektiert werden, werden über die Signalausgänge 43 der Steuer- und Auswerteeinheit 49 zugeführt, so daß jeweils acht Spaltensignale in der Reihenfolge der Zeilen sequentiell ausgelesen werden. Dem erfindungsgemäßen Verfahren entsprechend unterteilt die Steuer- und Auswerteeinheit 49 die von den Empfangselementen 42 erhaltenen Signale in die zwei Empfangszonen 44. Der Abbildung durch die Sende- und Empfangsoptik 48 entsprechend ist der Überwachungsbereich 53 somit in die zwei Objektzonen 54 unterteilt. Die lediglich eine einzige Lichtempfangseinheit 41 aufweisende Sensoranordnung 46 arbeitet somit wie zwei unabhängige Einzelsensoren, die derart justiert sind, daß ihre Überwachungsbereiche genau benachbart sind.

Falls die Steuer- und Auswerteeinheit 49 aufgrund der Ausgangssignale der Empfangselemente 42 ein Objekt 45 in einer der Objektzonen 54 detektiert, erzeugt sie an dem der entsprechenden Objektzone 54 zugeordneten Schaltausgang 50 ein Gegenstands-Feststellungssignal.

Der Steuer- und Auswerteeinheit 49 der Sensoranordnung 46 können während eines Teach-Vorgangs verschiedene zu detektierende Kontraste des die Lichtempfangseinheit 41 beaufschlagenden Lichts eingelernt werden. Dabei können nicht nur Grauwert-Unterschiede innerhalb einer Empfangszone 44, sondern beispielsweise auch verschiedene geometrische Ausdehnungen der Objekte 45 eingelernt werden. Hierfür werden während des Teach-Vorgangs Referenzobjekte in den Überwachungsbereich 53 eingeführt. Den Merkmalen dieser Referenzobjekte entsprechend können verschiedene Grauwerte, Kontraste oder Ausdehnungen als Bezugswerte für die beiden Empfangszonen 44 eingelernt werden.

Falls beispielsweise während des Teach-Vorgangs ein bestimmter Objektkontrast und eine bestimmte Referenzhöhe, also Ausrichtung in Z-Richtung, eines Referenzobjekts eingelernt wird, kann die Höhe der Objekte 45 als Unterscheidungsmerkmal im nachfolgenden Betrieb der Sensoranordnung 47 herangezogen werden. Insbesondere kann der Steuer- und Auswerteeinheit 49 eingelernt werden, daß nur bei Erkennen von Objekten 45 einer bestimmten Mindesthöhe innerhalb einer Objektzone 54 ein Gegenstands-Feststellungssignal an dem der Objektzone 54 entsprechenden Schaltausgang 50 erzeugt wird.

Die Merkmale eines in lediglich eine der beiden Objektzonen 54 eingeführten Referenzobjekts können für beide Objektzonen 54 bzw. Empfangszonen 44 übernommen werden. Es jedoch auch möglich, der Steuer- und Auswerteeinheit 49 für jede Objektzone 54 unterschiedliche Referenzmerkmale einzulernen. Insbesondere müssen die Empfangszonen 44 nicht unbedingt gleich groß sein.

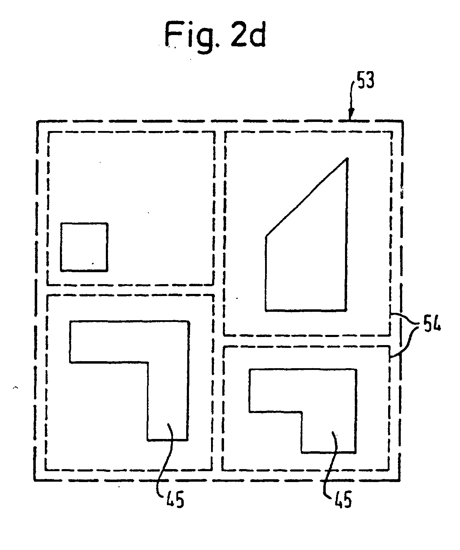

In Figur 2d ist beispielsweise in schematischer Vorderansicht eine Objektszene von vier unterschiedlich geformten, jeweils unterschiedliche Lichtkontraste reflektierenden Objekten 45 innerhalb des Überwachungsbereichs 53 dargestellt. Diese Objektszene wird von der Sensoranordnung 46 erfindungsgemäß erfaßt, indem der Überwachungsbereich 53 in die vier in Figur 2d dargestellten Objektzonen 54 unterteilt ist. Innerhalb jeder Objektzone 54 kann ein Objekt 45 detektiert und identifiziert werden. Eine derartige Betriebsweise ist insbesondere dann begünstigt, wenn die Lichtempfangseinheit 41 bzw. jede Empfangszone 44 eine höhere Anzahl von Empfangselementen 42 aufweist, so daß innerhalb jeder Empfangszone 44 noch ein Lichtkontrast zwischen Objekt 45 und Hintergrund detektiert werden kann.

Schließlich kann die Sensoranordnung 46 auch dazu verwendet werden, Bewegungen der Objekte 45 innerhalb des in den Figuren 2a und 2c dargestellten Überwachungsbereichs 53 bzw. einer Objektzone 54 zu erfassen. Hierfür werden zeitlich sich in einer Richtung, beispielsweise der Richtung Z, verschiebende Sequenzen von Empfangselement-Schaltsignalen der Zonen 45 einer Bewegung der entsprechenden Objekte 45 in dieser Richtung zugeordnet. In einer weiteren Ausführungsform der erfindungsgemäßen Unterteilung der Lichtempfangseinheit 41 kann die Steuer- und Auswerteeinheit 49 auch einem bereits identifizierten Objekt 45 eine einzige Empfangszone 44 zuordnen und deren Lage innerhalb der Lichtempfangseinheit 41 bzw. die Unterteilung der Lichtempfangseinheit 41 entsprechend der Bewegung des Objekts 45 kontinuierlich anpassen. Die Steuer- und Auswerteeinheit 49 kann zur Erfassung von Bewegungen von Objekten 45 mit einem Fördermittel, das die Objekte 45 transportiert, synchronisiert sein.

Bei den vorgenannten Ausführungsformen der Sensoranordnung 46, bei denen eine über Gegenstands-Feststellungssignale hinausgehende Informationen ausgegeben werden sollen, sind die Schaltausgänge 50 bevorzugt als Datenübertragungs-Leitungen ausgebildet, über die derartige Informationen, wie beispielsweise die Höhe eines Objekts 45 oder eine durch eine bestimmte Anordnung von Objekten 45 verschlüsselte Zahl, in analoger oder digitaler Form übertragen werden können.

Der Vorteil des erfindungsgemäßen Verfahrens besteht in der Verwendung einer einzigen Lichtempfangseinheit 41 als mehrere unabhängige, jedoch zueinander justierte Einzelsensoren. Die in den Figuren 2a, 2c und 2d dargestellten Unterteilungen in Empfangszonen 44 bzw. Objektzonen 54 sind dabei nur zwei Möglichkeiten. Je nach Anwendungsfall sind mit derselben Sensoranordnung 46 verschiedene andere Unterteilungen der Lichtempfangseinheit 41 möglich, wodurch sich eine flexiblere und einfachere Anwendung der Sensoranordnung 46 ergibt, als bei Verwendung mehrerer separater Einzelsensoren möglich wäre.

### BEZUGSZEICHENLISTE

- 1: Lichtempfangseinheit
- 2: Empfangselement
- 3: Signalausgang
- 4: Empfangszone
- 5: Sensoranordnung
- 6: Gehäuse
- 7: Empfangsoptik
- 8: Sendeoptik
- 9: Steuer- und Auswerteeinheit
- 10: Schaltausgang
- 11: Wahlschalter
- 12: Lichtquelle
- 13: Überwachungsbereich
- 14: Objektzone
- 15: Trägerbahn
- 16: Objekt

- 41: Lichtempfangseinheit
- 42: Empfangselement
- 43: Signalausgang
- 44: Empfangszone
- 45: Objekt
- 46: Sensoranordnung
- 47: Gehäuse
- 48: Sende- und Empfangsoptik
- 49: Steuer- und Auswerteeinheit
- 50: Schaltausgang
- 51: Strahlteiler-Spiegel
- 52: Lichtquelle
- 53: Überwachungsbereich
- 54: Objektzone

- D: Abstand

- X: Richtung
- Y: Richtung
- Z: Richtung

## Patentansprüche

1. Verfahren zum Betrieb einer opto-elektronischen Sensoranordnung (5, 46) mit einer Lichtempfangseinheit (1, 41) zum Empfang von aus einem Überwachungsbereich (13, 53) stammendem Licht und mit einer Steuer- und Auswerteeinheit (9, 49),
wobei die Lichtempfangseinheit (1, 41) in mehrere Empfangszonen (4, 44) unterteilt wird, die jeweils einer Objektzone (14, 54) im Überwachungsbereich (13, 53) entsprechen,
**dadurch gekennzeichnet,**
**daß** innerhalb der Empfangszonen (4, 44) auftretende Unterschiede des Kontrasts des die Lichtempfangseinheit (1, 41) beaufschlagenden Lichts detektiert werden, und
**daß** jeder Empfangszone (4, 44) ein eigener Schaltausgang (10, 50) zugewiesen wird, an dem die Steuer- und Auswerteeinheit (9) in Abhängigkeit von dem detektierten Kontrastunterschied jeweils ein Gegenstands-Feststellungssignal erzeugt,
wobei die Unterteilung der Lichtsempfangseinheit (1, 41) in Empfangszonen (4, 44) variabel ist.

2. Verfahren nach Anspruch 1,
**dadurch gekennzeichnet,**
**daß** die Empfangszonen (4, 44) unabhängig voneinander ausgelesen werden.

3. Verfahren nach einem der vorhergehenden Ansprüche,
**dadurch gekennzeichnet,**
**daß** jede Empfangszone (4, 44) der Lichtempfangseinheit (1, 41) mehrere, zu einem Schaltsignal zusammenfaßbare Ausgangssignale liefert, die jeweils der Beaufschlagung eines bestimmten örtlichen Bereichs der Empfangszone (4, 44) mit Licht entsprechen.

4. Verfahren nach einem der vorhergehenden Ansprüche,
**dadurch gekennzeichnet,**
**daß** die innerhalb der Empfangszonen (4, 44) auftretenden Kontrastunterschiede auf den Umrissen, der Oberflächenbeschaffenheit und/oder der Transparenz von in den Objektzonen (14, 54) befindlichen Objekten (16, 45) beruhen.

5. Verfahren nach einem der vorhergehenden Ansprüche,
**dadurch gekennzeichnet,**
**daß** ein Kontrastunterschied des eine Empfangszone (4, 44) beaufschlagenden Lichts unabhängig von seinem örtlichen Auftreten innerhalb der Empfangszone (4, 44) erkannt und in ein Schaltsignal transformiert wird.

6. Verfahren nach einem der vorhergehenden Ansprüche,
**dadurch gekennzeichnet,**
**daß** die Unterteilung der Lichtempfangseinheit (1, 41) in Empfangszonen (4, 44) einer bestimmten Anwendung der Sensoranordnung (5, 46) angepaßt wird.

7. Verfahren nach einem der vorhergehenden Ansprüche,
**dadurch gekennzeichnet,**
**daß** die Unterteilung der Lichtempfangseinheit (1, 41) in Empfangszonen (4, 44) durch Betätigung von Auswahlmitteln, insbesondere durch Programmierung, vorgenommen wird.

8. Verfahren nach einem der vorhergehenden Ansprüche,
**dadurch gekennzeichnet,**
**daß** die Unterteilung der Lichtempfangseinheit (1, 41) in Empfangszonen (4, 44) aufgrund eines Teach-Vorgangs der Sensoranordnung (5, 46) vorgenommen wird.

9. Verfahren nach einem der vorhergehenden Ansprüche,
**dadurch gekennzeichnet,**
**daß** während eines Teach-Vorgangs die innerhalb einer Empfangszone (4, 44) und/oder zwischen verschiedenen Empfangszonen (4, 44) auftretenden Kontrastunterschiede des die Lichtempfangseinheit (1, 41) beaufschlagenden Lichts der Steuer- und Auswerteeinheit (9, 49) eingelernt werden.

10. Verfahren nach einem der vorhergehenden Ansprüche,
**dadurch gekennzeichnet,**
**daß** während eines Teach-Vorgangs zumindest ein Referenzobjekt in den Überwachungsbereich (13, 53) eingebracht wird und der Kontrast des vom Referenzobjekt stammenden Lichts, der Kontrast zwischen dem vom Referenzobjekt stammenden Licht und dem Hintergrundlicht, ein Grauwert oder Grauwertbereich des vom Referenzobjekt stammenden Lichts und/oder die geometrische Ausdehnung eines Kontrastbereichs oder eines Grauwertbereichs der Steuer- und Auswerteeinheit (9, 49) eingelernt werden.

11. Verfahren nach einem der vorhergehenden Ansprüche,
**dadurch gekennzeichnet,**
**daß** durch Auswahlmittel, insbesondere durch Programmierung, festgelegt wird, ob die während eines Teach-Vorgangs für eine Empfangszone (4, 44) ermittelten Kontrastunterschiede des die Lichtempfangseinheit (1, 41) beaufschlagenden Lichts nur dieser einen Empfangszone (4, 44) oder allen Empfangszonen (4, 44) gemeinsam als eingelernt zugrunde gelegt werden.

12. Verfahren nach einem der vorhergehenden Ansprüche,
**dadurch gekennzeichnet,**
**daß** der Steuer- und Auswerteeinheit (9, 49) während eines Teach-Vorgangs zeitliche Objektsequenzen eingelernt werden.

13. Verfahren nach einem der vorhergehenden Ansprüche,
**dadurch gekennzeichnet,**
**daß** in der Steuer- und Auswerteeinheit (9, 49) als Ergebnis eines Teach-Vorgangs Bezugswerte abgelegt werden, die insbesondere jeweils einer Empfangszone (4, 44) zugeordnet sind.

14. Verfahren nach einem der vorhergehenden Ansprüche,
**dadurch gekennzeichnet,**
**daß** die Ausgangssignale der Lichtempfangseinheit (1, 41) in der Steuer- und Auswerteeinheit (9, 49) zusammen verarbeitet, miteinander oder mit Bezugswerten verglichen und/oder digitalisiert werden.

15. Verfahren nach einem der vorhergehenden Ansprüche,
**dadurch gekennzeichnet,**
**daß** die Objektzonen (14, 54) des Überwachungsbereichs (13, 53) in einer Ebene liegen, die im wesentlichen parallel zur photoempfindlichen Fläche der Lichtempfangseinheit (1, 41) ist.

16. Verfahren nach einem der vorhergehenden Ansprüche,
**dadurch gekennzeichnet,**
**daß** Objekte (16, 45) im Überwachungsbereich (13, 53) passiv oder aktiv, insbesondere gepulst und/oder mit definierter Lichtstärke und/oder Licht eines definierten Wellenlängenbereichs,beleuchtet werden.

17. Verfahren nach einem der vorhergehenden Ansprüche,
**dadurch gekennzeichnet,**
**daß** Objekte (16, 45) im Überwachungsbereich (13, 53) mittels mehrerer Lichtquellen beleuchtet werden, die insbesondere Licht unterschiedlicher Wellenlängen aussenden und bevorzugt sequentiell betrieben werden.

18. Opto-elektronische Sensoranordnung (5, 46) mit einer Lichtempfangseinheit (1,41) zum Empfang von aus einem Überwachungsbereich (13, 53) stammendem Licht und mit einer Steuer- und Auswerteeinheit (9, 49),
wobei die Lichtempfangseinheit (1, 41) aus mehreren Empfangselementen (2, 42) aufgebaut ist, und
wobei die Lichtempfangseinheit (1, 41) in mehrere Empfangszonen (4, 44) unterteilt ist, die jeweils einer Objektzone (14, 54) im Überwachungsbereich (13, 53) entsprechen,
**dadurch gekennzeichnet,**
**daß** die Steuer- und Auswerteeinheit (9) zur Detektion von Kontrastunterschieden des die Lichtempfangseinheit (1, 41) beaufschlagenden Lichts ausgebildet ist, die innerhalb der Empfangszonen (4, 44) auftreten, und
**daß** jeder Empfangszone (4, 44) ein eigener Schaltausgang (10, 50) zugewiesen ist, an dem in Abhängigkeit von dem detektierten Kontrastunterschied durch die Steuer- und Auswerteeinheit (9) jeweils ein Gegenstands-Feststellungssignal erzeugbar ist,
wobei die Unterteilung der Lichtempfangseinheit (1, 41) in Empfangszonen (4, 44) variabel ist.

19. Opto-elektronische Sensoranordnung nach Anspruch 18,
**dadurch gekennzeichnet,**
**daß** jeder Empfangszone (4, 44) jeweils mehrere Empfangselemente (2, 42) variabel, zuweisbar sind.

20. Opto-elektronische Sensoranordnung nach einem der Ansprüche 18 und 19,
**dadurch gekennzeichnet,**
**daß** die Lichtempfangseinheit (1, 41) als Opto-ASIC, Photodiode, Photo-Array, oder CCD, insbesondere mit Empfangselementen (2, 42) in Zeilen- oder Matrix-Anordnung, ausgebildet ist.

21. Opto-elektronische Sensoranordnung nach einem der Ansprüche 18 bis 20,
**dadurch gekennzeichnet,**
**daß** die Steuer- und Auswerteeinheit (9, 49) Schwellwert-Komparatoren und/oder einen Analog/Digital-Wandler aufweist.

22. Opto-elektronische Sensoranordnung nach einem der Ansprüche 18 bis 21,
**dadurch gekennzeichnet,**
**daß** sie als Lichttaster, Lumineszenstaster, Lichtschranke und/oder Reflexionslichtschranke ausgebildet ist.

## Claims

1. A method for the operation of an optoelectronic sensor arrangement (5, 46) with a light receiver unit (1, 41) for the reception of light originating from a monitored zone (13, 53) and with a control and evaluation unit (9, 49), wherein the light receiver unit (1, 41) is divided into a plurality of receiving zones (4, 44) which each correspond to an object zone (14, 54) in the monitored zone (13, 53),
**characterised**
**in that** differences of the contrast of the light incident on the light receiver unit (1,41) occurring within the receiving zones (4, 44) are detected; and
**in that** a separate switch output (10, 50) is allocated to each receiving zone (4, 44), with the control and evaluation unit (9) generating a respective object detection signal at said switch output in dependence on the detected contrast difference;
wherein the division of the light receiver unit (1, 41) into receiving zones (4, 44) is variable.

2. A method in accordance with claim 1, **characterised in that** the receiving zones (4, 44) are read out independently of one another.

3. A method in accordance with any one of the preceding claims,
**characterised in that** each receiving zone (4, 44) of the light receiver unit (1,41) delivers a plurality of output signals which can be combined to form one switch signal and which each correspond to the light incident on a specific local region of the receiving zone (4, 44).

4. A method in accordance with any one of the preceding claims,
**characterised in that** the contrast differences occurring inside the receiving zones (4, 44) are based on the outlines, on the surface property and/or on the transparency of objects (16, 45) located in the object zones (14, 54).

5. A method in accordance with any one of the preceding claims,
**characterised in that** a contrast difference of the light incident on a receiving zone (4, 44) is recognised independently of its local occurrence within the receiving zone (4, 44) and is transformed into a switch signal.

6. A method in accordance with any one of the preceding claims,
**characterised in that** the division of the light receiver unit (1, 41) into receiving zones (4, 44) is matched to a specific application of the sensor arrangement (5, 46).

7. A method in accordance with any one of the preceding claims,
**characterised in that** the division of the light receiver unit (1, 41) into receiving zones (4, 44) is carried out by actuation of selection means, in particular by programming.

8. A method in accordance with any one of the preceding claims,
**characterised in that** the division of the light receiver unit (1, 41) into receiving zones (4, 44) is carried out on the basis of a teaching process of the sensor arrangement (5, 46).

9. A method in accordance with any one of the preceding claims,
**characterised in that** the contrast differences of the light incident on the light receiver unit (1, 41) occurring inside a receiving zone (4, 44) and/or between different receiving zones (4, 44) are taught to the control and evaluation unit (9, 49) during a teaching process.

10. A method in accordance with any one of the preceding claims,
**characterised in that** at least one reference object is introduced into the monitored zone (13, 53) and the contrast of the light originating from the reference object, the contrast between the light originating from the reference object and the background light, a grey value or grey value range of the light originating from the reference object and/or the geometrical extent of a contrast range or of a grey value range are taught to the control and evaluation unit (9, 49) during a teaching process.

11. A method in accordance with any one of the preceding claims,
**characterised in that** it is laid down by selection means, in particular by programming, whether the contrast differences of the light incident on the light receiver unit (1, 41) determined during a teaching process for a receiving zone (4, 44) should be used as the taught basis for only this one receiving zone (4, 44) or for all receiving zones (4, 44) together.

12. A method in accordance with any one of the preceding claims,
**characterised in that** object sequences in time are taught to the control and evaluation unit (9, 49) during a teaching process.

13. A method in accordance with any one of the preceding claims,
**characterised in that** reference values ,which are in particular each associated with one receiving zone (4, 44), are stored in the control and evaluation unit (9, 49) as the results of a teaching process.

14. A method in accordance with any one of the preceding claims,
**characterised in that** the output signals of the light receiver unit (1, 41) are processed together, are compared with one another or with reference values and/or are digitized in the control and evaluation unit (9, 49).

15. A method in accordance with any one of the preceding claims,
**characterised in that** the object zones (14, 54) of the monitored zone (13, 53) lie in one plane which is essentially parallel to the photosensitive surface of the light receiver unit (1, 41).

16. A method in accordance with any one of the preceding claims,
**characterised in that** objects (16, 45) in the monitored zone (13, 53) are illuminated passively or actively, in particular in a pulsed manner and/or with a defined luminous intensity and/or with light of a defined wavelength range.

17. A method in accordance with any one of the preceding claims,
**characterised in that** objects (16, 45) in the monitored zone (13, 53) are illuminated by means of a plurality of light sources which in particular transmit light of different wavelengths and are preferably operated sequentially.

18. An optoelectronic sensor arrangement (5, 46) with a light receiver unit (1, 41) for the reception of light originating from a monitored zone (13, 53) and with a control and evaluation unit (9, 49),
wherein the light receiver unit (1, 41) is made up of a plurality of receiving elements (2, 42), and
wherein the light receiver unit (1, 41) is divided into a plurality of receiving zones (4, 44) which each correspond to an object zone (14, 54) in the monitored zone (13, 53),
**characterised**
**in that** the control and evaluation unit (9) is designed for the detection of contrast differences of the light incident on the light receiver unit (1, 41) occurring inside the receiving zones (4, 44); and
**in that** a separate switch output (10, 50) is allocated to each receiving zone (4, 44), with the control and evaluation unit (9) generating a respective object detection signal at said switching output in dependence on the detected contrast difference;
wherein the division of the light receiver unit (1,41) into receiving zones (4, 44) is variable.

19. An optoelectronic sensor arrangement in accordance with claim 8,
**characterised in that** a plurality of receiving elements (2, 42) can be respectively assigned to each receiving zone (4, 44).

20. An optoelectronic sensor arrangement in accordance with one of the claims 18 and 19, **characterised in that** the light receiver unit (1, 41) is made as an Opto-ASIC, a photodiode, a photo-array, or CCD, in particular comprising receiving elements (2, 42) in a line or matrix arrangement.

21. An optoelectronic sensor arrangement in accordance with any one of claims 18 to 20, **characterised in that** the control and evaluation unit (9, 49) has threshold value comparators and/or an analogue/digital converter.

22. An optoelectronic sensor arrangement in accordance with any one of claims 18 to 21, **characterised in that** it is made as a light scanner, a luminescence scanner and/or a reflection light barrier.

## Revendications

1. Procédé destiné au fonctionnement d'un dispositif de détection optoélectronique (5, 46), comportant une unité de réception de lumière (1, 41) pour la réception de lumière provenant d'une zone de surveillance (13, 53), et une unité de commande et d'évaluation (9, 49),
l'unité de réception de lumière (1, 41) étant subdivisée en plusieurs zones de réception (4, 44) qui correspondent chacune à une zone d'objet (14, 54) dans la zone de surveillance (13, 53),
**caractérisé en ce que,**
des différences de contraste de la lumière arrivant à l'unité de réception de lumière (1, 41) intervenant à l'intérieur des zones de réception (4, 44) sont détectées, et
**en ce qu'**une sortie de commutation (10, 50) propre à chaque zone de réception (4, 44) est affectée à cette dernière, au niveau de laquelle l'unité de commande et d'évaluation (9) génère un signal de détection d'objet en fonction de la différence de contraste détectée,
la subdivision de l'unité de réception de lumière (1, 41) en zones de réception (4, 44) étant variable.

2. Procédé selon la revendication 1,
**caractérisé en ce que**
les zones de réception (4, 44) peuvent être lues indépendamment l'une de l'autre.

3. Procédé selon l'une des revendications précédentes,
**caractérisé en ce que**
chaque zone de réception (4, 44) de l'unité de réception de lumière (1, 41) délivre plusieurs signaux de sortie pouvant être regroupés en un signal de commutation, qui correspondent à chaque fois à l'arrivée de lumière dans une zone locale définie de la zone de réception (4, 44).

4. Procédé selon l'une quelconque des revendications précédentes,
**caractérisé en ce que**
les différences de contraste intervenant à l'intérieur des zones de réception (4, 44) sont dues à des contours, à la nature de surface et/ou à la transparence d'objets (16, 45) se trouvant dans les zones d'objets (14, 54).

5. Procédé selon l'une quelconque des revendications précédentes,
**caractérisé en ce que**
une différence de contraste de la lumière arrivant dans une zone de réception (4, 44) est détectée indépendamment de son incidence locale à l'intérieur de la zone de réception (4, 44), et est convertie en un signal de commutation.

6. Procédé selon l'une quelconque des revendications précédentes,
**caractérisé en ce que**
la subdivision de l'unité de réception de lumière (1, 41) en zones de réception (4, 44) est adaptée à une application définie du dispositif de détection (5, 46).

7. Procédé selon l'une quelconque des revendications précédentes,
**caractérisé en ce que**
la subdivision de l'unité de réception de lumière (1, 41) en zones de réception (4, 44) est effectuée par l'actionnement de moyens de sélection, notamment par programmation.

8. Procédé selon l'une quelconque des revendications précédentes,
**caractérisé en ce que**
la subdivision de l'unité de réception de lumière (1, 41) en zones de réception (4, 44) est effectuée sur la base d'un processus d'apprentissage du dispositif de détection (5, 46).

9. Procédé selon l'une quelconque des revendications précédentes,
**caractérisé en ce que**
les différences de contraste de la lumière arrivant à l'unité de réception de lumière (1, 41), intervenant à l'intérieur d'une zone de réception (4, 44) et/ou entre différentes zones de réception (4, 44), sont enseignées à l'unité de commande et d'évaluation (9, 49) pendant un processus d'apprentissage.

10. Procédé selon l'une quelconque des revendications précédentes,
**caractérisé en ce que**,
pendant un processus d'apprentissage, au moins un objet de référence est introduit dans la zone de surveillance (13, 53), et **en ce que** le contraste de la lumière provenant de l'objet de référence, le contraste entre la lumière provenant de l'objet de référence et la lumière de fond, une valeur de gris ou une plage de valeur de gris de la lumière provenant de l'objet de référence et/ou l'extension géométrique d'une zone de contraste ou d'une plage de valeur de gris, sont enseignés à l'unité de commande et d'évaluation (9, 49).

11. Procédé selon l'une quelconque des revendications précédentes,
**caractérisé en ce que**,
il est déterminé par des moyens de sélection, notamment par programmation, si les différences de contraste de la lumière arrivant à l'unité de réception de lumière (1, 41), décelées pour une zone de réception (4, 44) pendant un processus d'apprentissage, sont prises pour base en tant qu'enseignées pour cette seule zone de réception (4, 44) ou pour toutes les zones de réception (4, 44) en commun.

12. Procédé selon l'une quelconque des revendications précédentes,
**caractérisé en ce que**
des séquences d'objets chronologiques sont enseignées à l'unité de commande et d'évaluation (9, 49) pendant un processus d'apprentissage.

13. Procédé selon l'une quelconque des revendications précédentes,
**caractérisé en ce que**
des valeurs de référence, qui sont notamment associées respectivement à une zone de réception (4, 44), sont mémorisées dans l'unité de commande et d'évaluation (9, 49) en tant que résultat d'un processus d'apprentissage.

14. Procédé selon l'une quelconque des revendications précédentes,
**caractérisé en ce que**
les signaux de sortie de l'unité de réception de lumière (1, 41) sont traités ensemble dans l'unité de commande et d'évaluation (9, 49), comparés entre eux ou avec des valeurs de référence et/ou numérisés.

15. Procédé selon l'une quelconque des revendications précédentes,
**caractérisé en ce que**
les zones d'objets (14, 54) de la zone de surveillance (13, 53) sont situées dans un plan qui est sensiblement parallèle à la surface photosensible de l'unité de réception de lumière (1, 41).

16. Procédé selon l'une quelconque des revendications précédentes,
**caractérisé en ce que**
des objets (16, 45) sont éclairés de façon passive ou active dans la zone de surveillance (13, 53), notamment par impulsions, et/ou avec une intensité lumineuse définie et/ou avec de la lumière d'une plage de longueur d'onde définie.

17. Procédé selon l'une quelconque des revendications précédentes,
**caractérisé en ce que**
des objets (16, 45) sont éclairés dans la zone de surveillance (13, 53) au moyen de plusieurs sources lumineuses, qui émettent notamment de la lumière de différentes longueurs d'ondes, et qui fonctionnent de préférence de façon séquentielle.

18. Dispositif de détection optoélectronique (5, 46), comportant une unité de réception de lumière (1, 41) pour la réception de lumière provenant d'une zone de surveillance (13, 53), et une unité de commande et d'évaluation (9, 49),
l'unité de réception de lumière (1, 41) étant constituée de plusieurs éléments récepteurs (2, 42), et
l'unité de réception de lumière (1, 41) étant subdivisée en plusieurs zones de réception (4, 44), qui correspondent chacune à une zone d'objet (14, 54) dans la zone de surveillance (13, 53),
**caractérisé en ce que**,
l'unité de commande et d'évaluation (9) est agencée pour détecter des différences de contraste de la lumière arrivant à l'unité de réception de lumière (1, 41), qui interviennent à l'intérieur des zones de réception (4, 44), et
**en ce qu'**une sortie de commutation (10, 50) propre à chaque zone de réception (4, 44) est affectée à cette dernière, au niveau de laquelle l'unité de commande et d'évaluation (9) peut générer un signal de détection d'objet en fonction de la différence de contraste détectée,
la subdivision de l'unité de réception de lumière (1, 41) en zones de réception (4, 44) étant variable.

19. Dispositif de détection optoélectronique selon la revendication 18,
**caractérisé en ce que**
plusieurs éléments récepteurs (2, 42) peuvent être affectés de façon variable à chaque zone de réception (4, 44).

20. Dispositif de détection optoélectronique selon l'une des revendications 18 et 19,
**caractérisé en ce que**
l'unité de réception de lumière (1, 41) est agencée sous la forme d'une opto-ASIC, d'une photodiode, d'un photo array ou d'un CCD, notamment avec des éléments récepteurs (2, 42) disposés en ligne ou en matrice.

21. Dispositif de détection optoélectronique selon l'une quelconque des revendications 18 à 20,
**caractérisé en ce que**
l'unité de commande et d'évaluation (9, 49) comporte des comparateurs de valeur de seuil et/ou un convertisseur analogique / numérique.

22. Dispositif de détection optoélectronique selon l'une quelconque des revendications 18 à 21,
**caractérisé en ce que**
il est agencé sous la forme d'un détecteur de lumière, d'un détecteur électroluminescent, d'une barrière lumineuse et/ou d'une barrière à réflexion de lumière.
